# EUROPEAN PATENT APPLICATION

(11) **EP 1 870 960 A2**
(43) Date of publication of application: **26.12.2007**
(21) Application number: 07107884.4
(22) Date of filing: 10.05.2007
(51) Int. Cl.: H01Q 21/00, H01Q 1/24

(54) **Method and apparatus for correcting signal-to-noise ratio in mobile terminal**

(30) Priority: 20.06.2006 KR 20060055522
(71) Applicant: Samsung Electronics Co., Ltd., Yeongtong-gu Suwon-si, Gyeonggi-do (KR)
(72) Inventor: Lee, Chang-Seok, Yeongtong-gu, Suwon-si, Gyeonggi-do (KR); Kisselev, Boris, Yeongtong-gu, Suwon-si, Gyeonggi-do (KR); Lee, Kang-Hoon, Yeongtong-gu, Suwon-si, Gyeonggi-do (KR); Sim, Dae-Hyun, Yeongtong-gu, Suwon-si, Gyeonggi-do (KR); Lee, Dong-Jun, Yeongtong-gu, Suwon-si, Gyeonggi-do (KR)
(74) Representative: Grünecker, Kinkeldey, Stockmair & Schwanhäusser Anwaltssozietät

(57) **Abstract**

A method and apparatus for correcting a Signal-to-Noise Ratio (SNR) of an antenna of a mobile terminal, which can detect if a Micro-Electro Mechanical System (MEMS) reconfigurable antenna for wireless communication contacts a foreign substance, to correct an SNR of the antenna. The mobile terminal having the MEMS reconfigurable antenna changes the MEMS reconfigurable antenna and calculates an SNR during execution of the wireless communication, thereby setting the MEMS reconfigurable antenna to an antenna form corresponding to a greatest SNR.

## Description

The present invention generally relates to a method for correcting the Signal-to-Noise Ratio (SNR) in a mobile terminal, more particularly to a method and apparatus for correcting the SNR in a mobile terminal including a Micro-Electro Mechanical System (MEMS) reconfigurable antenna.

Generally, a mobile terminal refers to a terminal which can be easily carried, such as a Personal Digital Assistant, and can wirelessly transmit or receive data, such as voice, audio, text, video, images, etc., to allow a user to communicate with his/her counterpart.

Such a mobile terminal has an antenna, and plays the role of converting electromagnetic waves present in a free space into electric signals, or reversely converting electric signals into electromagnetic waves. Generally, antennas for mobile terminals can be classified into a helical antenna, a whip antenna, and a planar inverted F antenna. Helical and whip antennas are mounted on mobile terminals to extend out of the mobile terminals. A planar inverted F antenna is mounted inside a mobile terminal rather than outside a mobile terminal.

A mobile terminal with a planar inverted F antenna has portability and rigidity which are superior to a mobile terminal with an external antenna. Thus, it is possible to design mobile terminals in various forms of appearance. However, there is a problem in that mobile terminals have a low SNR when an antenna thereof contacts a foreign substance.

Accordingly, the present invention has been made to solve the above-mentioned problems occurring in the prior art. It is the object of the present invention to provide a method for correcting an SNR when an antenna of a mobile terminal contacts a foreign substance.

This object is solved by the subject matter of the independent claims.

Preferred embodiments are defined in the dependent claims.

It is another aspect of the present invention to provide a method for minimizing degradation in performance of an antenna of a mobile terminal due to contact with a foreign substance.

In order to accomplish the object and the aspects of the present invention, according to an aspect of the present invention, there is provided a method for correcting an SNR of an antenna of a mobile terminal, the method including setting an antenna by activating or inactivating some of antenna pixels constituting an MEMS reconfigurable antenna according to a basic antenna form corresponding to a current executed wireless communication, among basic antenna forms stored in advance when the MEMS configurable antenna operates, and calculating and storing SNRs; sequentially and individually detecting correct antenna forms stored in advance with relation to the basic antenna form; changing and setting an arrangement of antenna pixels of the antenna depending on the detected correct antenna forms; calculating and storing SNRs during the changing and setting of the antenna; detecting an SNR with a greatest value from the stored SNRs; and finally setting the MEMS configurable antenna according to the antenna form corresponding to the detected SNR.

In order to accomplish the object and the aspects of the present invention, there is provided a method for correcting an SNR of an antenna of a mobile terminal, the method including setting an antenna by activating or inactivating antenna pixels constituting an MEMS reconfigurable antenna according to a basic antenna form corresponding to a currently executed wireless communication, among basic antenna forms stored in advance when the MEMS configurable antenna operates, and calculating and storing SNRs; distinguishing antenna pixels, which contact a foreign substance, from activated antenna pixels; inactivating antenna pixels contacting the foreign substance; changing and setting an arrangement of antenna pixels of the antenna by inactivating or activating effective pixels according to a pixel changing method when a number of effective pixels which are the currently activated antenna pixels is greater than a number of reference pixels and is less than a number of activated pixels of the basic antenna form; calculating and storing an SNR to correspond to the set antenna; detecting an SNR with a greatest value from the stored SNRs; and finally setting the MEMS configurable antenna according to the antenna form corresponding to the detected SNR.

In order to accomplish the object and the aspects of the present invention, according to another aspect of the present invention, there is provided an apparatus for correcting an SNR of an antenna of a mobile terminal, the apparatus including a memory for storing basic antenna forms defined by an antenna characteristic according to signal characteristics of wireless communication provided to the mobile terminal, and corrected antenna forms relating to the basic antenna forms; an MEMS reconfigurable antenna including antenna pixels; and a controller for setting an antenna by activating or inactivating antenna pixels according to a basic antenna form corresponding to a currently executed wireless communication when the MEMS configurable antenna operates, calculating and storing an SNR, sequentially changing the antenna according to a corrected antenna form detected from the memory, calculating and storing the SNR each time when the antenna is changed, and setting the MEMS reconfigurable antenna depending on a corrected antenna form corresponding to the stored SNR with a greatest value.

In order to accomplish the object and the aspects of the present invention, according to another aspect of the present invention, there is provided an apparatus for correcting an SNR of an antenna of a mobile terminal, the apparatus including a memory for storing a basic antenna form determined according to an antenna characteristic which depends on signal characteristics of a wireless communication provided to the mobile terminal; a MEMS reconfigurable antenna including fine antenna pixels; a touch sensor for detecting if the MEMS reconfigurable antenna contacts a foreign substance; and a controller for setting an antenna by activating or inactivating antenna pixels according to a basic antenna form corresponding to a currently executed wireless communication when the MEMS configurable antenna operates, calculating and storing the SNR, inactivating the antenna pixels depending on detected space data which is information on contact of the antenna with the foreign substance and input from the touch sensor, changing the antenna by inactivating or reactivating effective pixels, which are current activated pixels of the antenna, in a pixel changing manner, calculating and storing an SNR each time when the antenna is changed, and setting the MEMS reconfigurable antenna depending on a corrected antenna form corresponding to the stored SNR with a greatest value.

The present invention will be more apparent from the following detailed description taken in conjunction with the accompanying drawings, in which:
FIG. 1 is a block diagram illustrating a mobile terminal according to the present invention;
FIG. 2 is a view showing a configuration of a MEMS reconfigurable antenna according to the present invention;
FIG. 3 is a view showing the position of a user's hand on a mobile terminal according to the present invention;
FIG. 4 is a flowchart illustrating processes for correcting the SNR of the antenna of the mobile terminal according to a first embodiment of the present invention;
FIG. 5 is a flowchart illustrating processes for correcting the SNR of the antenna of the mobile terminal according to a second embodiment of the present invention; and
FIG. 6 is a view illustrating the operation of a MEMS reconfigurable antenna according to the second embodiment of the present invention.

Preferred embodiments of the present invention will be described herein below with reference to the accompanying drawings. In the following description, well-known functions or constructions are not described in detail since they would obscure the invention in unnecessary detail.

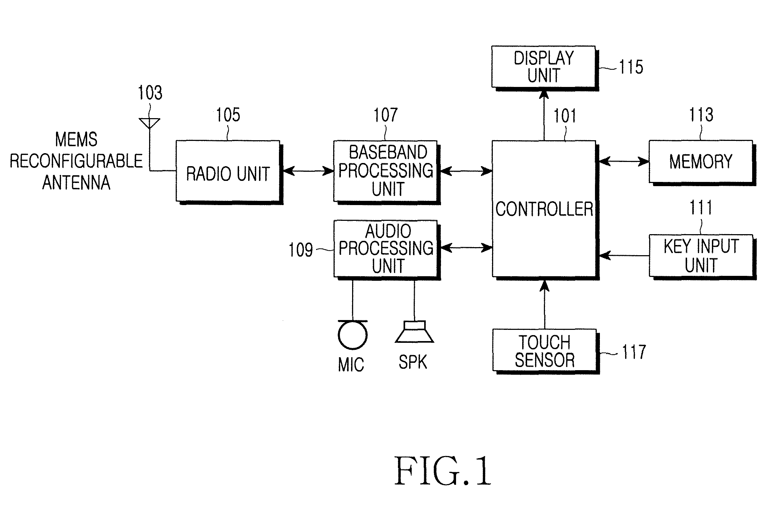

FIG. 1 shows a mobile terminal according to the present invention. A radio unit 105 carries out a wireless communication function of the mobile terminal. The radio unit 105 includes a radio frequency (RF) transmitter for up-converting and amplifying frequency of signals to be transmitted, and an RF receiver for low-noise amplifying received signals and down-converting frequency of the received signals.

A baseband processing unit 107 includes a transmitter for encoding and modulating signals to be transmitted and a receiver for demodulating and decoding received signals. An audio processing unit 109 converts sound signals output from a controller 101 into audible sound to output the audible sound, or converts audible sound, which is input from outside, into sound signals.

A key input unit 111 includes numeral keys (including * key and # key) for dialing, and function keys for carrying out various functions, and generates and outputs key signals corresponding to keys which is pushed by a user to the controller 101.

A display unit 115 displays a current state of the mobile terminal and an operation state of the mobile terminal according to control of the controller 101, and generally includes a Liquid Crystal Display (LCD) and Organic Light Emitting Diodes (OLEDs).

A Micro-Electro Mechanical System (MEMS) reconfigurable antenna 103 mechanically and electrically changes the configuration of an antenna using MEMS technology, to control characteristics of the antenna including resonance frequency, bandwidth, duplicate type, gain, etc. Therefore, the MEMS reconfigurable antenna 103 may be a multi-band antenna capable of wirelessly transmitting and receiving various signals. An MEMS reconfigurable antenna among different MEMS reconfigurable antenna will be described as an example, which can electrically control antenna characteristics using MEMS switches.

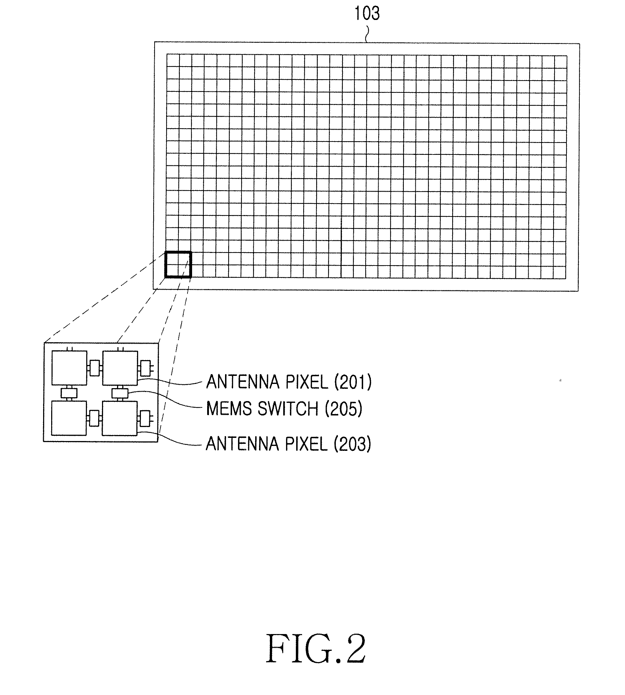

FIG. 2 shows an MEMS reconfigurable antenna 103 according to the present invention. The MEMS reconfigurable antenna 103 has fine antenna pixels 201 and 203 arranged in rectangular shapes. In the MEMS reconfigurable antenna 103, the antenna pixels 201 and 203 are connected by an MEMS switch 205. As the MEMS switch 205 is turned on or off, the antenna pixel may be activated or inactivated. Since each antenna pixel 201 or 203 possesses an inherent characteristic of the antenna, antenna characteristics of the MEMS reconfigurable antenna 103 can be changed depending on the activation or inactivation of the antenna pixels.

The MEMS reconfigurable antenna 103 has different antenna arrangements in which the antenna pixels are activated during wireless voice communication, or Digital Multimedia Broadcasting (DMB) reception. The antennas are arranged differently in wireless voice communication and DMB reception because an antenna has different characteristics depending on signal characteristics of wireless communication.

In other words, the arrangement of the antenna pixels is determined according to antenna characteristics. The activated antenna pixels and the inactivated antenna pixels are determined according to the arrangement of the antenna pixels. In the present invention, information on the arrangement of the antenna pixels in the MEMS reconfigurable antenna 103, which is determined according to characteristics of such an antenna, is referred to as the antenna form.

Therefore, when a user or his/her counterpart requests voice communication, the MEMS reconfigurable antenna 103 activates antenna pixels depending on the antenna form which is suitable for voice communication and changes the setting of the antenna pixels. Further, the MEMS reconfigurable antenna 103 activates the antenna pixels based on an antenna form which is suitable for DMB when a user requests DMB. The above-mentioned antenna forms which are suitable for voice communication or DMB are stored in advance in the memory 113.

Referring to FIG. 1 again, the memory 113 stores data to control the mobile terminal. In the present invention, the memory 113 already stores basic antenna forms corresponding to wireless communication supported by the mobile terminal. For example, the memory 113 of the mobile terminal supporting DMB or voice communication already stores basic antenna forms corresponding to voice communication or DMB.

In one example of the present invention, the memory 113 already has stored in it a corrected antenna form related to one basic antenna form. The corrected antenna form is used for correcting a characteristic of a changed antenna when the MEMS reconfigurable antenna 103 is set, and for operating in the basic antenna form when the MEMS reconfigurable antenna 103 contacts a foreign substance to cause its characteristic to change.

When a user selects one communication among wireless communication, MEMS reconfigurable antenna 103 operates in a basic antenna form to correspond to the selected communication. At this time, when an external matter makes contact with the MEMS reconfigurable antenna 103, the characteristics of the MEMS reconfigurable antenna are changed, so that the SNR is degraded. Therefore, the MEMS reconfigurable antenna 103 operates in one form among a plurality of correction antenna forms which are stored in advance, according to control of the controller 101, so as to correct the changed antenna.

The corrected antenna form stored in the memory 113 can be obtained through experimentation. In particular, the corrected antenna form may focus on correction of a resonant frequency, which is one characteristic of the antenna changed due to contact with a foreign substance.

It is assumed that the basic antenna form of the MEMS reconfigurable antenna 103 set during the experimentation corresponds to voice communication.

One of the hand positions used to grip the mobile terminal is selected. Then, it is identified if the MEMS reconfigurable antenna 103 contacts the hand. Among the antenna pixels activated in a basic antenna form, the antenna pixels contacting the hand are inactivated so the arrangement of the MEMS reconfigurable antenna 103 is changed. In the present invention, the residual activated pixels after the antenna pixels, which contacts the hand, among the antenna pixels activated in the basic antenna form, are inactivated, are referred to as effective pixels.

Since the effective pixels are inactivated or activated again according to whether the effective pixels contact the hand, the MEMS reconfigurable antenna 103 may have several tens to several hundreds of antenna arrangements, and each antenna arrangement may have several tens to several hundreds of antenna forms.

The reason for derivation of the antenna forms from the effective pixels is to derive a form to correct the changed antenna characteristic when a hand comes into contact with a MEMS reconfigurable antenna set according to a basic antenna form.

If the number of effective pixels is less than a certain number, the MEMS reconfigurable antenna 103 loses an antenna characteristic. Therefore, only when the number of effective pixels is beyond the certain number, the effective pixels can be inactivated or reactivated.

Then, an SNR corresponding to the derived antenna form is calculated and stored. An SNR, which is greater than a predetermined value, is detected among the stored SNR. An antenna form corresponding to the detected SNR is selected, and designated as the corrected antenna form. Another one of the hand positions used to grip the mobile terminal is selected, and the above-mentioned experimentation is carried out again.

Accordingly, a plurality of corrected antenna forms may be designated according to the hand positions with which a user grips the corrected antenna form.

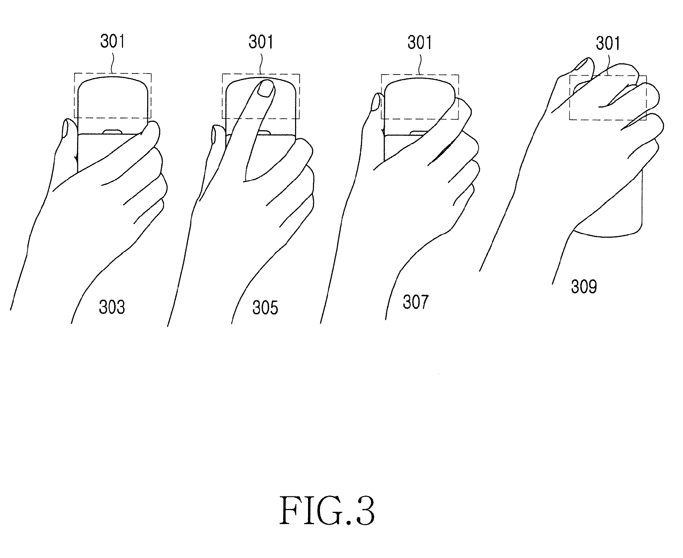

FIG. 3 shows a position of a user's hand on a mobile terminal according to the present invention, and a process for selecting the corrected antenna form will be described. A space 301 is a location at which the MEMS reconfigurable antenna 103 is located. The antenna 103 is mounted on the back surface of a mobile terminal to occupy a portion of the back surface.

Reference numerals 303, 305, 307 and 309 indicate examples of user's hand positions when the user uses the mobile terminal. The hand positions 303, 305, 307, and 309 are selected from a large number of hand positions with which the user grips the mobile terminal. The corrected antenna forms corresponding to the selected hand positions can be derived through experimentation.

With relation to the hand-movement 303, the user's hand does not contact the MEMS reconfigurable antenna 103 when the user grips the mobile terminal with his/her hand. Therefore, the corrected antenna form is not derived.

With relation to the hand positions 305 and 307, the user's hand contacts the MEMS reconfigurable antenna 103 when the user grips the mobile terminal with his/her hand.

The antenna arrangement of the MEMS reconfigurable antenna 103 operating in the basic antenna form can be changed because the user's hand contacts a portion of the MEMS reconfigurable antenna 103, according to the experiment. Thus, for hand-movements 305 and 307, various types of corrected antenna forms can be derived.

With relation to the hand position 309, the user's hand contacts the entire MEMS reconfigurable antenna 103 when the user grips the mobile terminal with his/her hand. All the antenna pixels are inactivated or loses their antenna characteristics because the user' hand contacts the entire MEMS reconfigurable antenna 103 operating in the basic antenna form, according to the experiment. Thus, for hand-movement 309, a corrected antenna form cannot be derived.

The memory 113 stores all the corrected antenna forms which are derived due to the hand-movements 303, 305, 307 and 309.

Referring to FIG. 1 again, the touch sensor 117 is a sensor for detecting if a foreign substance contacts the antenna. The touch sensor 117 is mounted on the exterior of the mobile terminal to overlap a space in which the MEMS reconfigurable antenna is located. Therefore, the touch sensor 117 transmits the detected space data corresponding to a contact portion to the controller 101 when a foreign substance contacts the mobile terminal. The controller 101 analyzes the detected space data and inactivates the antenna pixels corresponding to the contact portion at which the user's hand contacts the mobile terminal.

The controller 101 controls overall operation of the mobile terminal. The controller 101 turns on or off the switches of the MEMS reconfigurable antenna 103 to activate or inactivate the antenna pixel 201, resulting in a change of an arrangement of the antenna pixels 201, according to the present invention. Thus, the MEMS reconfigurable antenna 103 is set.

As described above, the controller 101 sets the MEMS reconfigurable antenna 03 in various corrected antenna forms stored in advance in the memory 113. The controller 101 can also detect a contact surface contacting the MEMS reconfigurable antenna 103 using the touch sensor 117, and then set the MEMS reconfigurable antenna 103 in consideration of the detected contact surface.

In one example of the present invention, the controller 101 operates the MEMS reconfigurable antenna 103 in the corresponding basic antenna form when the wireless communication is requested. The controller 101 sequentially detects the corrected antenna form stored in advance according to the basic antenna forms in the memory 113, and changes the MEMS reconfigurable antenna according to the detected antenna forms. The controller 101 calculates and stores the signal-to-noise to correspond to each antenna form. Further, the controller 101 sets the MEMS reconfigurable antenna 103 according to the corrected antenna form corresponding to the greatest SNR. As described above, the mobile terminal 117 cannot have the touch sensor 117 in this example.

In another example of the present invention, the controller 101 operates the MEMS reconfigurable antenna 103 according to the corresponding basic antenna form when the wireless communication is requested. The controller 101 receives the detected space data from the touch sensor 117. Then, the controller 101 analyzes the detected space data to inactivate the antenna pixels corresponding to a contact portion at which the foreign substance contacts with the mobile terminal. Further, the controller 101 inactivates the pixels corresponding to the contact portion at which the foreign substance, among the antenna pixels activated in the basic antenna form, and activates or inactivates effective pixels which are residual activated pixels, according to a pixel changing method. The pixel changing method derives the antenna form satisfying the antenna characteristic of the basic antenna.

The controller 101 calculates and stores the SNR corresponding to the antenna form which can be changed according to the pixel changing method. Then, the controller 101 sets the MEMS reconfigurable antenna 103 in the antenna form corresponding to the greatest SNR stored in the memory.

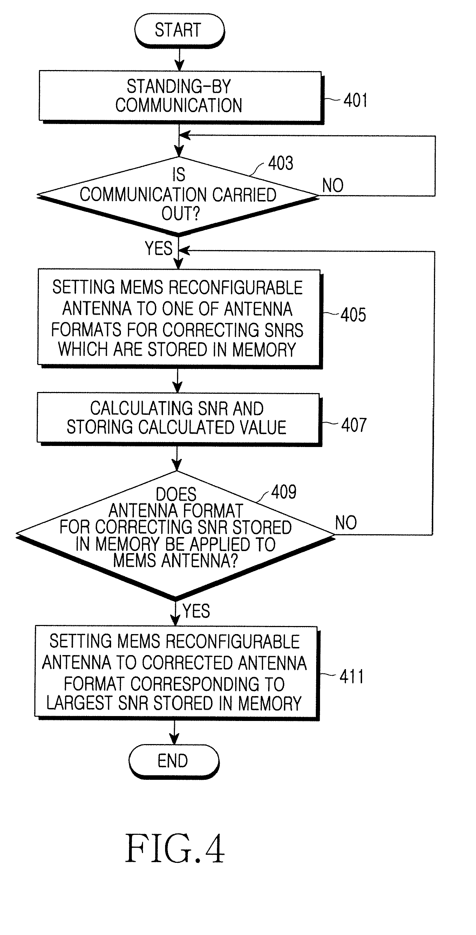

In the first example of the present invention, the controller 101 sets the MEMS reconfigurable antenna 103 in one of the corrected antenna forms stored in the memory 113. FIG. 4 shows processes for correcting SNR of the antenna of the mobile terminal according to the first example of the present invention. Processes of correcting the SNR of the antenna will be described with reference to FIGS. 1 to 4. It is assumed that the SNR is corrected during voice communication.

The controller 101 sets the MEMS reconfigurable antenna to be in a communication standby mode, in step 401. The controller 101 activates the antenna pixels of the MEMS configurable antenna 103 depending on a basic antenna form corresponding to the voice communication.

In step 403, the controller 101 identifies if the user or counterpart requests communication. The controller 101 proceeds to step 405 if communication is requested. If communication is not requested, the controller 101 proceeds to step 403 and again identifies if communication is requested.

In step 405, the controller 101 sequentially detects the corrected antenna forms stored in the memory 113, and activates the antenna pixels of the MEMS reconfigurable antenna 103 depending on a detected form.

The controller 101 can turn on or off a switch 205 MEMS reconfigurable antenna 103, and thereby activates or inactivates the pixels 201 of the antenna. Therefore, the controller 101 turns on or off the switch 205 of the antenna to change the antenna arrangement.

If one of the corrected antenna forms stored in the memory 113 is detected, the controller 101 activates or inactivates the antenna pixels of the MEMS reconfigurable antenna 103, which currently operates depending on the detected corrected antenna form.

The controller 101 classifies the current pixels of the MEMS reconfigurable antenna 103 into antenna pixels to be activated and antenna pixels to be inactivated, with reference to the detected corrected antenna form. Further, the controller 101 turns on the switch corresponding to the pixels to be activated, and turns off the switch corresponding to the pixels to be inactivated, thereby activating or inactivating the antenna pixels of the MEMS reconfigurable antenna 103 depending on the detected corrected antenna form.

In step 407, the controller 101 calculates and stores an SNR depending on the antenna form which is changed in step 405.

The controller 101 calculates and stores an SNR using voice signals transmitted from a remote node to the mobile terminal. When an SNR is stored, the controller 101 enables the stored SNR to correspond to the corrected antenna form.

In step 409, the controller 101 identifies if all the corrected antenna forms stored in advance in the memory 113 are separately applied to the MEMS reconfigurable antenna 103.

The controller 101 proceeds to step 411 if all the corrected antenna forms are applied to the MEMS reconfigurable antenna 103. However, if all the corrected antenna forms are not applied to the MEMS reconfigurable antenna 103, the controller proceeds to step 405 to repeatedly carry out step 405.

In step 411, the controller 101 checks the greatest SNR among the SNRs stored in the memory 113. The controller 101 detects the corrected antenna form corresponding to the checked SNRs from the memory 113, and finally activates or inactivates the antenna pixels of the MEMS reconfigurable antenna 103 depending on the detected corrected antenna form.

The first example of the present invention provides a method of correcting an SNR, in which the MEMS reconfigurable antenna 103 is changed in a corrected antenna form so the SNR which is lowered due to contact of a user's body with the antenna when the user's hand contacts the MEMS reconfigurable antenna 103.

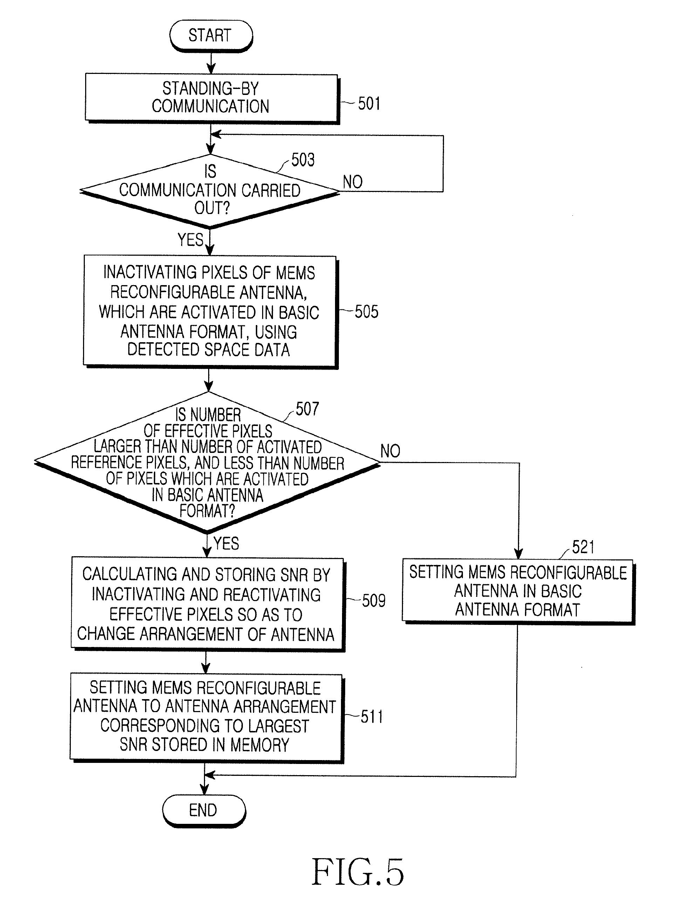

According to the second example of the present invention, the controller 101 detects a contact surface contacting with the MEMS reconfigurable antenna 103 using the touch sensor 117, and sets the MEMS reconfigurable antenna 103 in consideration of the detected contact surface. FIG. 5 shows processes for correcting an SNR of an antenna of a mobile terminal according to the second example of the present invention. Processes for correcting the SNR of the antenna will be described with reference to FIGS. 1 to 5. It is assumed that an SNR is corrected during voice communication.

The controller 101 sets the MEMS reconfigurable antenna to be in a communication standby mode, in step 501. The controller 101 activates the antenna pixels of the MEMS reconfigurable antenna 103 depending on a basic antenna form corresponding to the voice communication.

The controller 101 identifies if the user or counterpart requests communication, in step 503. The controller 101 proceeds to step 505 if communication is requested. However, if communication is not requested, the controller 101 proceeds to step 503 and identifies if communication is requested again.

In step 505, the controller 101 inactivates the antenna pixels, which are detected by the touch sensor 117, among the pixels of the MEMS reconfigurable antenna 103 activated in a basic antenna form.

The controller 101 analyzes the detected space data input from the touch sensor 117 and determines the antenna pixels to be inactivated. Then, the controller 101 turns off the switch of the MEMS reconfigurable antenna 103 corresponding to the antenna pixels to be inactivated.

The touch sensor 117 transmits the detected space data, which corresponds to a contact portion at which the foreign substance contacts with the antenna, to the controller 101. The detected space data are position data for the contact surface with which the foreign substance contacts. The position data are identical with the position data of the antenna pixels. Therefore, the controller 101 can analyze the detected space data to detect position data of the contact surface and inactivate the antenna pixels to correspond to the detected position data.

The contact states of the MEMS reconfigurable antenna 117 may be classified into three cases, i.e. first, second, and third states. In the first state, the user's hand does not contact the MEMS reconfigurable antenna 117. In the second state, although the user's hand contacts the MEMS reconfigurable antenna 117, the antenna does not lose its characteristic. In the third state, the user's hand contacts the MEMS reconfigurable antenna 117, and as a result the antenna loses its characteristic.

In step 507, the controller 101 determines which one of the above-mentioned three cases the MEMS reconfigurable antenna 103 stays in.

With the classification of the three cases, the controller 101 classifies the state of the MEMS reconfigurable antenna 103 based on a number of activated pixels of the antenna, i.e. a number of effective pixels. The effective pixels refer to antenna pixels which are activated after step 505 is carried out. Specifically, the effective pixels are antenna pixels which still remain after the antenna pixels corresponding to contact of the user's hand with the MEMS reconfigurable antenna are inactivated depending on the basic antenna form.

In the case where the user's hand does not contact the MEMS reconfigurable antenna 103, the number of effective pixels may be identical with that of the activated pixels set in the basic antenna form in step 501. In the case where the user's hand covers most of the MEMS reconfigurable antenna so the antenna loses its characteristic, the number of effective pixels may be less than the number of activated reference pixels which is a minimum number of pixels to prevent the loss of the antenna characteristic. Further, in the second case where although the user's hand contacts the antenna, the antenna does not change its characteristic, the number of effective pixels is beyond the number of activated reference pixels but less than the number of basic antenna pixels.

In the first and third contact states, the controller 101 proceeds to step 521. In the second contact state, the controller 101 proceeds to step 509.

In step 521, the controller 101 activates the antenna pixels of the MEMS reconfigurable antenna 103 depending on the basic antenna form, and performs voice communication.

In step 509, the controller 101 changes the MEMS reconfigurable antenna 103 by inactivating the effective pixels in the pixel changing manner, or activating again the inactivated effective pixels. The controller 101 calculates and stores the SNR according to the changed antenna forms.

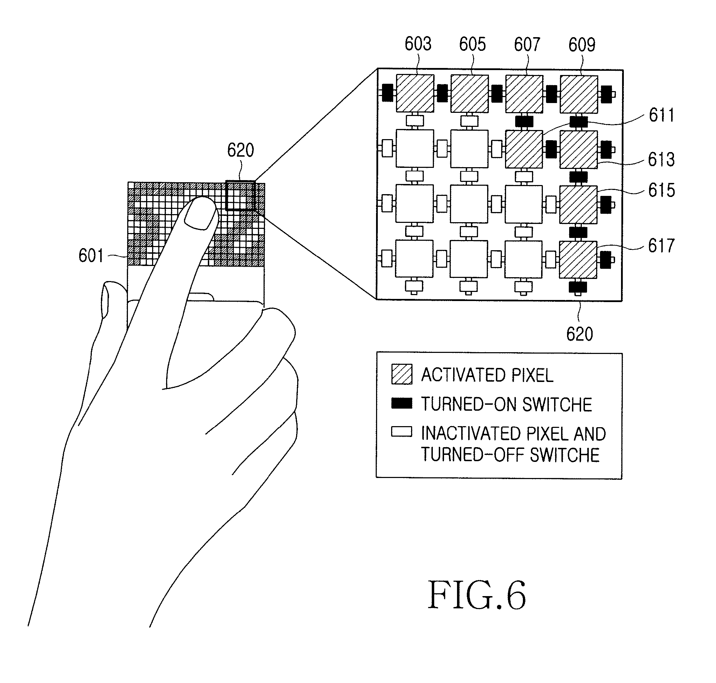

FIG. 6 shows operation of an MEMS reconfigurable antenna according to the second example of the present invention. The method of changing the pixels will be described with reference to FIGS. 1 to 6. In FIG. 6, a screen 601 is shown after step 505 is carried out. In the screen, the index finger is located at a center portion of the MEMS reconfigurable antenna. In the MEMS reconfigurable antenna 103, the pixels contacting the index finger, among the antenna pixels to be activated depending on the basic antenna form, are inactivated.

Then, the controller 101 inactivates the effective pixels of the MEMS reconfigurable antenna 103 in the pixel changing manner, or reactivates the inactivated effective pixels, so as to change the MEMS reconfigurable antenna 103.

According to the pixel changing manner, a reference pixel is determined in the effective pixels, and then the effective pixels are inactivated based on the reference pixel.

Specifically, the pixel 603 among the effective pixels 603 to 617 is defined as a reference pixel. Then, the effective pixels 605 to 617 except for the reference pixel are inactivated by a unit of a pixel, or the inactivated effective pixels are reactivated by a unit of a pixel. These processes are repeatedly carried out. The arrangement of the MEMS reconfigurable antenna 103 can be changed through the above-mentioned processes.

Alternatively, the pixels adjacent to one another among the effective pixels are defined as a reference pixel group. Then, the effective pixels can be inactivated based on the reference pixel group.

Specifically, the pixels 603 and 605 among the effective pixels 603 to 617 in a screen 620 are defined as the reference pixel group. Then, the effective pixels 607 to 617 except for the reference pixels are formed into pixel groups of the pixels 607 and 609, the pixels 611 and 613, and the pixels 615 and 617. Next, processes of inactivating the pixel groups, or reactivating the inactivated pixel groups are repeatedly carried out. Through the above-mentioned processes, the arrangement of the MEMS reconfigurable antenna 103 can be changed.

Referring to FIG. 5 again, the controller 101 calculates the SNR corresponding to the change antenna form, and stores the calculated SNR in the memory 113 so the calculated SNR corresponds to the corrected antenna form.

At step 511, the controller 101 detects the greatest SNR among the SNR stored at step 509. Then, the controller 101 detects an antenna corresponding to the detected SNR from the memory 113, and finally activates or inactivates the antenna pixels depending on the detected antenna form which detects the MEMS reconfigurable antenna 103.

While the wireless communication is carried out using the antenna finally set according to the present invention, the MEMS reconfigurable antenna 103 can be set by reflecting the hand positions even if the hand motion is changed.

In the second example of the present invention, therefore, when the user's hand contacts the MEMS reconfigurable antenna 103, the MEMS reconfigurable antenna 103 can be changed in consideration of a contact surface of a foreign substance detected by the touch sensor 117. As described above, the second example of the present invention provides the method for correcting the SNR which is lower due to the contact of the user's hand with the antenna.

In another example of the present invention provided with the memory 113 for storing corrected antenna forms corresponding to different hand positions, when the touch sensor determines the positions of the user's hand contacting the antenna, the corrected antennas related to the hand positions are detected from the memory 113 and applied to the MEMS reconfigurable antenna 103. Then, the SNR of the MEMS reconfigurable antenna 103 is calculated and stored. The corrected antenna form corresponding to the greatest SNR is detected. Then, the MEMS reconfigurable antenna 103 can be set depending on the detected corrected antenna form. Further, according to the present invention, when the MEMS reconfigurable antenna 103 is finally set, the wireless communication can be carried out using the set antenna. In addition, the arrangement of the antenna can be periodically set to be suitable to the wireless communication after the final setting of the antenna.

According to the present invention as described above, it is possible to correct an SNR which is lowered due to contact of a foreign substance with an antenna of a mobile terminal, and to prevent degradation of the antenna due to contact of a foreign substance with an antenna of a mobile terminal.

While the invention has been shown and described with reference to a certain preferred embodiment thereof, it will be understood by those skilled in the art that various changes in form and details may be made therein without departing from the scope of the invention as defined by the appended claims.

## Claims

1. A method for correcting a Signal-to-Noise Ratio, SNR, of an antenna of a mobile terminal, the method comprising the steps of:
setting an antenna by activating or inactivating some of antenna pixels constituting a Micro-Electro Mechanical System, MEMS, reconfigurable antenna according to a basic antenna form corresponding to a current executed wireless communication, among basic antenna forms stored in advance when the MEMS configurable antenna operates, and calculating and storing SNRs;
sequentially and individually detecting correct antenna forms stored in advance with relation to the basic antenna form;
changing and setting an arrangement of antenna pixels of the antenna depending on the detected correct antenna forms;
calculating and storing SNRs during the changing and setting of the antenna;
detecting an SNR with a greatest value from the stored SNRs; and
finally setting the MEMS configurable antenna according to the antenna form corresponding to the detected SNR.

2. The method as claimed in claim 1, wherein the basic antenna form is information on activation of the antenna pixels which is determined by an antenna characteristic according to signal characteristics of a wireless communication supported by the mobile terminal.

3. The method as claimed in claim 1 or 2, wherein a correct antenna form is information on activation of the antenna pixels which corrects an antenna characteristic to be changed when the MEMS configurable antenna set depending on the related basic antenna form contacts a foreign substance.

4. A method for correcting a Signal-to-Noise Ratio, SNR, of an antenna of a mobile terminal, the method comprising the steps of:
setting an antenna by activating or inactivating antenna pixels constituting a Micro-Electro Mechanical System, MEMS, reconfigurable antenna according to a basic antenna form corresponding to a currently executed wireless communication, among basic antenna forms stored in advance when the MEMS configurable antenna operates, and calculating and storing SNRs;
distinguishing antenna pixels, which contact a foreign substance, from activated antenna pixels;
inactivating antenna pixels contacting the foreign substance;
changing and setting an arrangement of antenna pixels of the antenna by inactivating or activating effective pixels according to a pixel changing method when a number of effective pixels which are currently activated antenna pixels is greater than a number of reference pixels and is less than a number of activated pixels of the basic antenna form;
calculating and storing an SNR to correspond to the set antenna;
detecting an SNR with a greatest value from the stored SNRs; and
finally setting the MEMS configurable antenna according to the antenna form corresponding to the detected SNR.

5. The method as claimed in claim 4, wherein in the pixel changing method, one or more antenna pixels among the effective pixels are defined as a reference pixel group, the effective pixels are inactivated by a unit of a pixel group, and the inactivated effective pixels are activated again.

6. The method as claimed in claim 4 or 5, wherein the basic antenna form is generated according to a frequency bandwidth of a wireless communication supported by the mobile terminal.

7. The method as claimed in one of claims 4 to 6, wherein the distinguishing step comprises:
detecting pixels, which contact the foreign substance, among all pixels of the antenna using a touch sensor;
receiving detected space data for information on the pixels detected by the touch sensor; and
analyzing the received detected space data to distinguish the pixels to be inactivated.

8. The method as claimed in claim 7, wherein the detected space data is position data of the antenna pixels contacting the foreign substance.

9. An apparatus for correcting a Signal-to-Noise Ratio, SNR, of an antenna of a mobile terminal, the apparatus comprising:
a memory for storing basic antenna forms defined by an antenna characteristic according to signal characteristics of wireless communication provided to the mobile terminal, and corrected antenna forms relating to the basic antenna forms;
a Micro-Electro Mechanical System, MEMS, reconfigurable antenna including antenna pixels; and
a controller for setting an antenna by activating or inactivating antenna pixels according to a basic antenna form corresponding to a currently executed wireless communication when the MEMS configurable antenna operates, calculating and storing an SNR, sequentially changing the antenna according to corrected antenna form detected from the memory, calculating and storing an SNR each time when the antenna is changed, and setting the MEMS reconfigurable antenna depending on the corrected antenna form corresponding to a stored SNR with a greatest value.

10. An apparatus for correcting a Signal-to-Noise Ratio, SNR, of an antenna of a mobile terminal, the apparatus comprising:
a memory for storing a basic antenna form determined according to an antenna characteristic which depends on signal characteristics of a wireless communication provided to the mobile terminal;
a Micro-Electro Mechanical System, MEMS, reconfigurable antenna including fine antenna pixels;
a touch sensor for detecting if the MEMS reconfigurable antenna contacts a foreign substance; and
a controller for setting an antenna by activating or inactivating antenna pixels according to a basic antenna form corresponding to a currently executed wireless communication when the MEMS configurable antenna operates, calculating and storing an SNR, inactivating the antenna pixels depending on detected space data which is information on contact of the antenna with the foreign substance and input from the touch sensor, changing the antenna by inactivating or reactivating effective pixels, which are current activated pixels of the antenna, in a pixel changing manner, calculating and storing an SNR each time when the antenna is changed, and setting the MEMS reconfigurable antenna depending on the corrected antenna form corresponding to the stored SNR with a greatest value.
